(19) Europäisches Patentamt
European Patent Office
Office européen des brevets

(11) Publication number: 0 369 019 B1

(12) EUROPEAN PATENT SPECIFICATION

(45) Date of publication of patent specification: 17.05.95

(51) Int. Cl.$^{6}$: C08J 5/18, B29C 47/10, H01G 4/18, G11B 5/704

(21) Application number: 89903254.4

(22) Date of filing: 07.03.89

(86) International application number:
PCT/JP89/00243

(87) International publication number:
WO 89/08677 (21.09.89 89/23)

The file contains technical information submitted after the application was filed and not included in this specification

(54) POLYPHENYLENE SULFIDE FILM AND PROCESS FOR ITS PRODUCTION.

(30) Priority: 07.03.88 JP 54530/88

(43) Date of publication of application:
23.05.90 Bulletin 90/21

(45) Publication of the grant of the patent:
17.05.95 Bulletin 95/20

(84) Designated Contracting States:
DE FR GB NL

(56) References cited:
JP-A- 5 534 968
JP-A-62 156 139

No further relevant documents have been disclosed.

(73) Proprietor: TORAY INDUSTRIES, INC.
2-1, Nihonbashi Muromachi 2-chome
Chuo-ku
Tokyo 103 (JP)

(72) Inventor: DEGUCHI, Yukichi
B1-23, 10, Sonoyama 2-chome
Otsu-shi
Shiga 520 (JP)
Inventor: NOGUCHI, Yukio
805, Kita Sakura
Yasu-cho
Yasu-gun
Shiga 520-23 (JP)
Inventor: SUDO, Masaaki
A1-25, 16, Takehana Jizo-ji Minamimachi
Yamashina-ku
Kyoto-shi
Kyoto 607 (JP)
Inventor: ITO, Kiyohiko
A8-23, 10, Sonoyama 2-chome
Otsu-shi
Shiga 520 (JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

(74) Representative: **Coleiro, Raymond et al**
**MEWBURN ELLIS**
**York House**
**23 Kingsway**
**London WC2B 6HP (GB)**

## Description

This invention relates to a polyphenylene sulfide film and a process for manufacturing it. The polyphenylene sulfide film of the present invention is especially useful as a dielectric material of capacitors and as a base film of magnetic recording media.

Polyphenylene sulfide films are conventionally used as F-class insulation thin materials in a variety of electrical equipment and parts. Fine particles are often incorporated in the polyphenylene sulfide films in order to improve the so-called "slipping property" of the film. As described in JP-A-34968/80, conventionally such a polyphenylene sulfide film containing the fine particles is manufactured by admixing the solid fine particles with the polyphenylene sulfide powder with a Henschel mixer or the like, stirring the resultant mixture, in which the polyphenylene sulfide is in a fused condition, to disperse the fine particles, and biaxially stretching the resulting polyphenylene sulfide resin composition under specific conditions. However, in the polyphenylene sulfide films prepared by this process, the dispersion of the fine particle is not uniform. As a result, not only is the slipping property of the film poor because of the large aggregations of the microparticles, but also insulation defects are likely to result especially in a case where the thickness of the film is not more than 10 $\mu$m, so that the films have poor characteristics for use as dielectric films of capacitors. Furthermore, when such polyphenylene sulfide films are used as base films of magnetic recording media such as floppy disks, drop out is likely to occur due to large protrusion present at the surface of the film. A polyphenylene sulfide film which has a good slipping property and high surface smoothness, and which has reduced number of insulation defects has not yet been obtained.

Accordingly, the object of the present invention is to provide a polyphenylene sulfide film (hereinafter also referred to as "PPS film") which has excellent surface smoothness and slipping property, and which has reduced number of insulation defects.

Another object of the present invention is to provide a capacitor which has excellent solder resistance, frequency characteristics and excellent thermal characteristics, and in which the distribution of capacity and ability to withstand voltage is uniform.

Still another object of the present invention is to provide a magnetic recording medium from which drop out is unlikely to occur and which has excellent dimensional stability and heat resistance.

Still another object of the present invention is to provide a process for producing a polyphenylene sulfide film which has excellent surface smoothness and slipping property, and which has a reduced number of insulation defects.

We have conducted intensive studies in order to find a polyphenylene sulfide film containing fine particles with specific average particle size, which has a single particle index in a specific range, has excellent surface smoothness and slipping property, and in order to establish a process for manufacturing this polyphenylene sulfide film.

Thus, the present invention provides a polyphenylene sulfide film which consists essentially of a resin composition containing polyphenylene sulfide as a major constituent, in which fine particles with an average particle size of 0.05 - 3 $\mu$m are dispersed, the fine particles having a single particle index of not less than 0.5.

The present invention further provides a capacitor comprising a biaxially oriented polyphenylene sulfide film which consists essentially of a resin composition containing polyphenylene sulfide as major constituent, in which fine particles with an average particle size of 0.05 - 3 $\mu$m are dispersed, which fine particles have a single particle index of not less than 0.5, as a major dielectric material and an inner electrode made of a metal foil or a non-self-supporting thin metal layer. In such a capacitor, the gloss Gs (60 °C) of the film may be 115-200%, and the film may have 5.0 protrusions/mm of protrusions higher than 0.5 m in terms of line density.

The present invention further provides a magnetic recording medium comprising a biaxially oriented polyphenylene sulfide film which consists essentially of a resin composition containing polyphenylene sulfide as major constituent, in which fine particles with an average particle size of 0.05 - 3 $\mu$m are dispersed, which fine particles have a single particle index of not less than 0.5, and a magnetic layer formed on at least one surface of the polyphenylene sulfide film. In such a magnetic recording medium, the number of large protrusions X (protrusions/100cm$^2$) from a surface of the film may satisfy the equation:

$$X \leqq 6000\ Ra \qquad (1)$$

wherein Ra is the centre line average surface roughness of the film surface. The magnetic layer may be formed on at least one surface of the polyphenylene sulfide film.

The present invention still further provides a process for producing a polyphenylene sulfide film comprising the steps of mixing a slurry of fine particles containing fine particles dispersed in a liquid medium having a boiling point of 180 - 290 ° C with polyphenylene sulfide powder such that the average particle size of the fine particles is not larger than 3 μm, the amount of the fine particles being from 1% by weight to 100% by weight with respect to the polyphenylene sulfide; supplying the resulting mixture to an extruder having at least one level of vent to fuse the polymer; eliminating the liquid medium of the slurry from the vent; and extruding the resulting polyphenylene sulfide in which the fine particles are dispersed to obtain a film in which the fine particles are dispersed.

The present invention still further provides a process for producing a polyphenylene sulfide film comprising the steps of supplying polyphenylene sulfide in a cylinder of an extruder having at least one level of vent; forcibly injecting into the cylinder of the extruder a slurry of fine particles dispersed in a liquid medium having a boiling point of 180 - 290 ° C, which fine particles are dispersed in the liquid medium such that the average particle size thereof is not larger than 3 μm, in an amount of from 1% by weight to 100% by weight in terms of the fine particles with respect to the polyphenylene sulfide polymer before and/or after the polymer is fused; eliminating the liquid medium alone from the vent; and extruding the mixture of the polymer and the fine particles to produce a film in which microparticles are dispersed.

The polyphenylene sulfide film of the present invention has an excellent slipping property and surface smoothness and the number of the insulation defects in the film is reduced. The polyphenylene sulfide film has excellent heat resistance, dimensinal stability and excellent electric characteristics, which are inherent in polyphenylene sulfide film. Thus, if the polyphenylene sulfide film of the present invention is used as a dielectric of a capacitor, a capacitor which has excellent solder resistance, frequency characteristics and excellent thermal characteristics, and in which the distribution of the capacity and ability to withstand voltage are uniform, may be obtained. Further, if the polyphenylene sulfide film of the present invention is used as a base film of a magnetic recording medium, a magnetic recording medium from which drop out is unlikely to occur may be obtained.

[Best Mode for Carrying Out the Invention]

In the present invention, the resin composition containing polyphenylene sulfide as major constituent (hereinafter referred to also as "PPS resin composition") means a composition containing poly-p-phenylene sulfide in an amount of 70% by weight or more. If the content of the poly-p-phenylene sulfide is less than 70% by weight, the heat resistance, frequency characteristics and the thermal characteristics of the film made from the resin composition are degraded. As long as the amount is not more than 30% by weight, other resins and/or various additives may be incorporated. The melt viscosity of the PPS may preferably be 500 to 12000 poise (1 poise = 0.1 Pas) at 300 ° C and at a shear rate of 200 $sec^{-1}$ because excellent heat resistance, dimensional stability and mechanical property as well as excellent thickness uniformity of the film may be obtained. It should be noted that the melt viscosity of the resin composition is identical with that of the PPS film finally obtained.

The term "poly-p-phenylene sulfide" (hereinafter referred to also as "PPS") means a polymer in which not less than 70 mol% (preferably not less than 85 mol%) of the repeating unit is a unit expressed by the formula

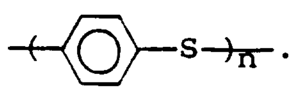

If the content of the repeating unit represented by the formula is less than 70 mol%, the crystallinity of the polymer is degraded and the thermal transition point is lowered, so that excellent heat resistance, dimensional stability and mechanical properties of the film, which are characteristic of PPS films, may not be obtained. As long as the content is less than 30 mol% (preferably less than 15 mol%), other copolymerizable units, e.g., a unit containing copolymerizable sulfide bond may be incorporated.

The polyphenylene sulfide film of the present invention contains fine particles. In the present invention, the fine particles are, at at least 350 ° C, an assemblage of solid particles, and the particles may be made of an inorganic or an organic material. Examples of the material of the fine particles may include minerals, metals, metal oxides, metal salts and organic polymer particles such as spherical silica (colloidal silica), dry silica, wet silica, alumina, calcium carbonate, titanium oxide, aluminum silicate and barium sulfate. These fine particles may be empolyed individually or in combination.

Examples of the orgaic polymer particles may include (crosslinked) divinylbenzene/styrene copolymer, polyimides and silicone resins particles. In cases where organic polymer particles are employed, the particle size may be adjusted not by pulverizing the polymer, but may preferably be adjusted in the particle-forming step such as in emulsion polymerization. Further, the 10% weight reduction point in the TGA curve may preferably be not lower than 350 °C, (more preferably not lower than 400 °C), to avoid the foaming in the step of extrusion. Although there is no upper limit to the 10% weight reduction point, it is difficult to produce particles with a 10% weight reduction point at a temperature higher than 600 °C.

In the present invention, the sphericity (longer axis/shorter axis) of the fine particles may preferably be not more than 1.3 (more preferably not more than 1.1) to improve scratch resistance, surface smoothness and slipping property of the film. Examples of the fine particles with this range of sphericity may include spherical silica, spherical crosslinked polystyrene and spherical silicone.

Although the content of the fine particles (in cases where two or more kinds of fine particle are employed, the total content thereof) in the film of the present invention is not restricted, it may preferably be 0.01 - 8.0% by weight, more preferably 0.03 - 5.0% by weight, still more preferably 0.1 - 2.0% by weight in view of the balance between the surface smoothness and slipping property.

The fine particles employed in the present invention have an average particle size of 0.05 to 3 μm, preferably 0.1 to 1.5 μm in the film. If the average particle size is smaller than the lower limit of the above-mentioned range, the slipping property of the film is poor, so that scratches are likely to be formed on the surface of the film during the manufacturing process of the film or during the manufacturing process of the capacitor or the magnetic recording medium. On the other hand, if the average particle size of the fine particles is larger than the upper limit of the above-mentioned range, the volume of shaved material is increased due to the elimination of the fine particles from the film, and the magnetic conversion of a magnetic recording medium employing the film is degraded. Especially when a film with a thickness of not more than 10 μm is produced, the increase in the volume of the above-mentioned shaved material is prominent and the ability to withstand voltage of a capacitor containing the film as the dielectric is degraded, so that it is not preferred.

In the film of the present invention, the single particle index of the fine particles in the film is not less than 0.5, preferably not less than 0.7, more preferably not less than 0.9. The term "single particle index" is defined as (A - B)/A wherein A represents the total area of the particles and B represents the area occupied by the aggregates formed of not less than two particles. As is apparent from this definition, if all of the fine particles exist as a single particle, the single particle index is 1. If the single particle index is less than 0.5, the volume of the shaved material is increased due to the elimination of the fine particles from the film and the magnetic conversion characteristics of magnetic recording media employing the film is degraded. Especially when a film with a thickness of not more than 10 μm is produced, the increase in the volume of the above-mentioned shaved material is prominent and the ability to withstand voltage of a capacitor containing the film as the dielectric is degraded, so that it is not preferred.

Although the polyphenylene sulfide film of the present invention may be non-oriented or uni-oriented, in view of the physical properties such as mechanical properties and heat resistance, biaxially oriented film is preferred. The term "biaxially oriented film" herein means a film produced by biaxially orienting an amorphous film consisting essentially of a resin composition containing polyphenylene sulfide as a major constituent It is preferred that crystallization degree of the film determined by X-ray diffraction be 25% - 45%, and the orientation factor OF determined for the crystal peak of 2$\theta$ from 20 to 21° by wide angle X-ray diffraction be 0.07 - 0.5 in the End and Edge directions and 0.6 - 1.0 in the Through direction.

In the polyphenylene sulfide film of the present invention, it is preferred that the number of crude protrusions X (protrusions/100 $cm^2$) satisfies the following equation (1) because the formation of scratches during the manufacturing process of the film, capacitor or the magnetic recording medium, and the frequency of drop out is smaller and the magnetic conversion characteristics are improved in the magnetic recording medium employing the film.

$$X \leqq 6000Ra \qquad (1)$$

wherein Ra means the center line average surface roughness of the film surface.

The PPS film of the present invention preferably has a surface gloss GS (60°) of 115% - 200%, more preferably 120% - 175%. If the surface gloss GS (60°) is within the above-described range, the capacitance stability is enhanced, when the film is used as the dielectric of a capacitor, and the insulation defects within the film are reduced, so that the ability to withstand voltage of the capacitor is increased. The surface gloss GS(60°) herein means the gloss of the film surface determined according to the 60 degrees mirror face gloss-measuring method defined in JIS-8741 (1962). The direction of measurement is selected

such that the impinging light beam is perpendicular to the longitudinal direction of the film. In cases where the film is transparent, since the reflection from the surface opposite to the surface to be measured is substantial, the measurement is conducted after applying black pigment on the opposite surface.

It is preferred that the surface of the PPS film of the present invention has a number of protrusions of a height of 0.05 µm or higher, which number is at least 5.0 protrusions/mm in terms of protrusion line density. If the number of such protrusions is within this range, not only in the ease of handling of the film improved, but also the insulation defects of the film are reduced, so that the fraction of a film defective in its ability to withstand voltage when used as a dielectric film in a capacitor is decreased to an extremely low level. The height of the protrusions is determined using a stylus type surface roughness meter under the conditions hereinbelow described. More particularly, if the top level of the "i"th peak of a roughness curve obtained with a vertical magnification of N moving the stylus at a velocity of 0.1 mm/sec is Mi and the level of the valley at the left side of the "i"th peak is Vi, the height Pi of the "i"th protrusion is defined by the following equation:

$$Pi = (Mi - Vi)/N$$

In this case, the moving direction of the stylus is perpendicular to the longitudinal direction of the film. The protrusion line density (hereinafter referred to as "Pd") means the number of protrusions per a unit length obtained by dividing the number of protrusions higher than a prescribed height in a roughness curve obtained by measuring the surface roughness as mentioned above over a length of 30 mm, with this measured length. For example, the protrusion line density of the protrusions with a height of not smaller than 0.05 µm (hereinafter referred to as Pd(0.05)) is the number of protrusions per unit length obtained by dividing the number of protrusions having a height of not smaller than 0.05 µm obtained according to the above-described method by the measured length.

The protrusion line density of the protrusions of a height not smaller than 0.1 um Pd(0.1) of the surface of the film may preferably be not less than 1.0 protrusion/mm to improve the ease of handling of the film. Further, the protrusion line density of the protrusions with a height of not less than 0.2 µm Pd(0.2) may preferably be not more than 2.0 protrusions/mm to improve the ability of a capacitor employing the film of the present invention as the dielectric to withstand voltage.

The center line average roughness Ra of the PPS film of the present invention may preferably be 0.05 µm to 0.12 µm, more preferably 0.005 µm to 0.10 µm to improve the ease of handling of the film and the electromagnetic conversion characteristics of a recording medium employing the film as its base film, as well as in view of the fact that, when the film is employed as the dielectric of a capacitor, it is easy to form the capacitor element and the adhesion of the film with the aluminum thin layer is good.

The present invention also provides a capacitor comprising a biaxially oriented film of the present invention as the dielectric and an inner electrode made of a metal foil or a thin metal layer.

The term "metal foil" herein means a self-supporting metal film. The thickness of the metal layer may preferably be 2 µm to 15 µm. The term "thin metal layer" herein means a non-self-supporting metal layer formed on the biaxially oriented PPS film support by a vacuum deposition method, sputtering method, plating method or the like. The thickness of the metal thin layer may preferably be 0.01 - 0.5 µm.

The material of these metal films is not restricted, and preferred examples of the material include aluminum, zinc, tin, copper, nickel, chromium, iron and titanium as well as mixtures and alloys thereof.

The structure of the capacitor of the present invention may be conventional. For example, the capacitor may be prepared by winding or stacking the polyphenylene sulfide film employing the above-mentioned metal film as the inner electrode. The capacitor which has the metal thin layer as the inner electrode and which has a laminated structure is a capacitor prepared by stacking the polyphenylene sulfide films having the metal thin layer formed on only one surface thereof, or by stacking a polyphenylene sulfide film having the metal thin layers formed on both surfaces thereof and a polyphenylene sulfide film on which the metal thin layer is not formed, to constitute a capacitor and by providing the capacitor with an outer electrode and, if necessary, encapsulation.

Although the capacitor of the present invention comprises polyphenylene sulfide film as the major dielectric the entire dielectrics may not necessarily be polyphenylene sulfide film, and other resin composition films such as, for example, polyethyleneterephthalate, polyethylenenaphthalate, polyolefins, polycarbonates, polyphenyleneoxides, polyetherether ketones and polyether imides may be co-employed in an amount not adversely affecting the heat resistance, thermal characteristics and the like which are advantageous features of the polyphenylene sulfide.

The mode of the capacitor of the present invention is not restricted at all. That is, the capacitor may be any well-known capacitor such as a capacitor with lead wires or without leads (a so called "chip" capacitor)

and is not restricted thereto. The encapsulation may also be provided by any method such as resin molding and resin dipping, or the capacitor may be encapsulated in a case. Further, the capacitor may have substantially no encapsulation such that the surface of the capacitor is coated with a thin resin layer, or the capacitor may have no encapsulation at all.

The present invention further provides a magnetic recording medium comprising a biaxially oriented PPS film of the present invention having a magnetic layer on at least one surface thereof. The magnetic layer and its manufacturing method are well-known in the art, and any of them may be employed in the present invention. For example, a magnetic solid such as $\gamma$-$Fe_2O_3$, $CrO_2$, Fe, Ni, Co and the like may be applied to the base film together with an organic binder, or the magnetic layer may be provided in the form of a thin layer by plating, vapor deposition or sputtering. In cases where the magnetic solid is applied together with an organic binder, the thickness of the magnetic layer is adjusted to about 0.1 $\mu$m to 10 $\mu$m, and various organic polymers such as polyurethane-based resins, polyvinyl chloride-based resins, epoxy resins, polyester resins, polyvinyl chloride-based resins and silicone resins may be employed as the organic binder. In cases where the magnetic layer is in the form of a thin layer, the magnetic layer usually has a thickness of 1 $\mu$m or less, and any recording mode such as horizontal and vertical types may be employed.

The process of manufacturing the polyphenylene sulfide film of the present invention will now be described.

The process of manufacturing the polyphenylene sulfide polymer per se is well-known in the art and any process of manufacturing polyphenylene sulfide may be employed. The process in which an alkali sulfide and p-dihalobenzene are reacted in a polar solvent under high temperature and high pressure is preferred. A process in which sodium sulfide is reacted with p-dichlorobenzene in an amide-based polar solvent such as N-methyl-2-pyrrolidone is especially preferred. In this case, it is most preferred to conduct the reaction in the presence of a polymerization modifier such as an alkali metal carboxylate at a temerature of 230 - 280 °C so as to adjust the polymerization degree. The pressure in the polymerization system and the polymerization time may be appropriately selected depending on the polymerization modifier employed, the amount thereof and the desired polymerization degree.

After the polymerization, the system is cooled to precipitate the polymer and the resulting polymer is dumped into water to form a slurry. The slurry is then filtered, washed with water and dried to obtain poly-p-phenylene sulfide powder.

A slurry in which the fine particles are dispersed in a liquid medium is then added to the PPS powder obtained as mentioned above and the mixture is well agitated with high speed agitation means such as Henschel mixer. The resulting mixture is then supplied to an extruder with at least one step of vent port and is well stirred in a molten condition in the extruder. Thereafter, the liquid medium is eliminated from the vent and the resultant is extruded from an appropriate spinerret to obtain a resin composition containing polyphenylene sulfide as the major component.

In the present invention, the fine particles are dispersed in a liquid medium to form a slurry (this may be hereinafter referred to as "fine particle slurry"), which liquid medium has a boiling point of 180 - 290 °C, preferably 180 - 250 °C. If the boiling point of the liquid medium is lower than the lower limit of the above-mentioned range, secondary co-aggregates of the fine particles are likely to be formed during stirring of the molten polyphenylene sulfide containing the slurry. On the other hand, if the boiling point of the liquid medium is higher than the upper limit of the above-mentioned range, it is difficult to eliminate the liquid medium from the vent after the polyphenylene sulfide containing the slurry is stirred in a molten condition. Examples of the liquid medium include ethyleneglycol, triethyleneglycol, N-methylpyrrolidone and diphenyl ether. A liquid medium, such as either of the former two liquid media, which does not dissolve polyphenylene sulfide at a temperature equal to its boiling point or higher is preferred. The fine particles are dispersed in the slurry such that the average particle size thereof is not larger than 3 $\mu$m, preferably not larger than 1.5 $\mu$m. The method of preparing such fine particles is not restricted. Examples of the method include a method in which the fine particles are added to the liquid medium and then dispersed by the aid of dispersing means such as a ball mill and a vibration mill, followed by filtration if required, and a method in which the fine particles are generated in the liquid medium and are grown to an appropriate particle size to form a sol, and the sol is subjected to solvent exchange or filtration, if necessary. The latter method is preferred in view of the fact that a slurry containing fine particles with small specific gravity and with high uniformity of the particle size may be obtained. The average particle size of the fine particles in the slurry may preferably be not smaller than 0.01 $\mu$m to improve stability against secondary co-aggregation. The content of the solid fine particles in the slurry may preferably be 10 - 70% by weight.

In the process for manufacturing the PPS film of the paresent invention, after the above-described fine particle slurry is added to the PPS powder, the mixture is uniformly mixed and the resultant mixture is

supplied to an extruder. The uniform mixing of the PPS powder and the fine particle slurry may preferably be attained by high speed agitation means such as Henschel mixer. Further, in this agitation step, the temperature of the materials may preferably be kept at a temperature lower than the boiling point of the dispersion medium of the slurry by 50 °C or more so as to prevent the evaporation of the liquid medium. The amount of the fine particle slurry added to PPS is adjusted to 1% to 100% in terms of the weight of the fine particles with respect to the weight of the PPS powder. The amount of the liquid component may preferably be 1% to 80% by weight with respect to the PPS powder. The resulting mixture is then supplied to an extruder having at least one step of vent port and is stirred in a molten condition in the extruder. Thereafter, the liquid component in the mixture is removed from the vent and the resultant is extruded from an appropriate spinneret to obtain a resin composition. In cases where an extruder has two or more steps of vents, the last venting should be conducted while the mixture is in a molten condition. Even in cases where a part of the liquid component of the mixture which has not yet melted is removed from a vent, the amount of the removed liquid component may preferably be not more than 50% by weight with respect to the total liquid medium. In any case, it is necessary that a state in which at least the liquid medium which is a dispersion medium, the fine particles and the melted polymer co-exist in the cylinder of the extruder is attained. By such an operation, the liquid component in the polymer is removed to a degree at which defects due to the evaporation of the liquid component such as by foaming do not result when the finally obtained resin composition is extruded from an extruder having no vents.

In the above-described method, the PPS powder and the fine particles are mixed before being supplied to an extruder. However, it is also possible firstly to supply PPS powder to an extruder and to forcibly inject the fine particle slurry in to the cylinder of the extruder through an opening formed in the extruder before and/or after the polymer is melted. The injection may be conducted continuously while extruding the resin composition. The other manufacturing conditions are the same as described above.

In either of the above-described methods, the desired resin composition may be obtained by extruding PPS in which the fine particles are dispersed through an appropriate spinneret mounted on the extruder. The resin composition may be in any form such as a film, sheet, fibers and any of various other molded articles as well as pellets. The resin composition may often be in the form of pellets and is used as a material for producing molded articles, films, sheets or fibers with or without being mixed with another composition (such as, for example, ordinary pellets of PPS).

The thus obtained resin composition containing PPS as the major component may be formed into a film, preferably a biaxially oriented film by a well-known method (e.g., as disclosed in JP-A-111235/80). For example, the resin composition may be supplied to an extruder and melted therein, and extruded through a T die onto a cooling drum to obtain a non-oriented sheet. The non-oriented sheet is then biaxially stretched simultaneously or sequentially at a temperature of 80 - 120 °C with an area stretching ratio of preferably not less than 4 times, and the resultant film is heat set under tension at a temperature not lower than 180 °C and not higher than the melting point to obtain an intermediate film. The intermediate film may then be heat treated at 30 - 120 °C for 5 seconds to 10 days. The duration of the heat treatment may be appropriately selected depending on the temperature employed. In general, the lower the temperature of the heat treatment, the longer the duration of the heat treatment. The heat treatment may be conducted continuously with the production of the intermediate film in the film-production line, or may be conducted after the film is wound about a roll. In the latter case, the heat treatment may be continuously conducted while unwinding the film or may be conducted by placing a roll in an air circulating oven. The heat treatment may be conducted in two or more steps under different temperature conditions. By the above-described process, the polyphenylene sulfide film of the present invention may be obtained.

A capacitor having the polyphenylene sulfide film of the present invention as the dielectric and a magnetic recording medium having the polyphenylene sulfide film of the present invention as the base film may be manufactured by any conventional method well-known in the art.

Methods of measuring various characteristics assoicated with a film of the present invention and methods of evaluation of effects which are referred to in the Examples hereinbelow described will now be described in summary.

[Methods of Measuring Characteristics and Evaluating Effects]

(1) Average Particle Size of Fine particles in Fine particle Slurry

The slurry is diluted with the same liquid medium and the particle size of the fine particles was measured by feeding the diluted slurry to an optical particle size distribution-measuring apparatus (CAPA5000 commercially available from Horiba Seisakusho).

(2) Crude Particles (a)

The crude particles were observed with a microscope. More particularly, a film having a thickness of about 10 µm was prepared and was observed with an optical microscope. The number of the particles having a longer diameter of not smaller than 10 µm was counted.

(3) Crude Particles (b)

Resin composition was supplied to an extruder after diluting with PPS natural resin so that the content of the fine particles in the polymer was 1% by weight and was extruded through a filter made of a metal fiber unwoven fabric mounted on the exit of the extruder, which filter had a filtration area of 10 $cm^2$ and a filtration precision of 5 µm (90% cut) at a rate of 5 kg/hr. The volume of the resin composition extruded until the filtration pressure became twice that at the initiation of the extrusion was determined. Needless to say, the more the extruded volume, the less the crude particles.

(4) Insulation Defects of Film

A sample film (200 mm x 250 mm) was intimately sandwiched between a brass electrode (150 mm x 200 mm, surface roughness of not more than 2S) and a surface of a polyester film vapor-deposited with aluminum, and the number of insulation defects after a DC voltage of 150 V/µm was applied thereto for 90 seconds was measured.

(5) Evaluation of Stability of Initial Capacitance of Capacitor

One thousand capacitors were manufactured under the same conditions and the capacitance of each capacitor was measured using an automatic capacitance bridge. The distribution of the capacitance (standard deviation) was expressed in %, which is defined as the initial capacitance stability. The smaller this value, the higher the stability.

(6) Evaluation of Fraction of Capacitors Defective in their Ability to Withstand Voltage

One thousand capacitors were manufactured under the same conditions and the voltage withstood by each capacitor was measured. The percentage of the capacitors which could not withstand a prescribed voltage is defined as the defective fraction. A voltage increasing at a rate of 100V/sec. was applied, and a threshhold voltage representing the minimum to be withstood was defined as the voltage at which a current of not less than 10 mA flowed. The prescribed threshhold voltage was 50V per 1 µm.

(7) Magnetic Conversion Characteristics and Drop Out

Magnetic coating solution was coated on a film with a gravure roll and the resulting magnetic layer was magnetically oriented, followed by drying the coated film. The film was then subjected to a calender treatment with a small test calendering apparatus (steel roll/Nylon roll, 5 steps) at 70°C under a line pressure of 200 kg/cm, and the resulting film was cured at 70°C for 48 hours. The thus obtained raw tape was slit to a width of 1/2 inch to prepare a pancake. A length of 250 m was cut from the pancake and was mounted in a VTR cassette to prepare a VTR cassette tape.

The thus prepared tape was set in a home VTR and 100% chroma S/N was measured using a television testing wave generator (TG7/U706) manufactured by Shibasoku Co., Ltd. A drop out number was also measured for this tape on which the testing wave was recorded. The drop out with a time width of not less than 5 µsec. and with an attenuation of the regenerated signal of not smaller than 16 dB was counted. The measurement of drop out was performed for 10 cassette tapes, and tapes with a drop out number less than 10 per 1 minute are indicated by the mark "◎", those with 10 - 40 per 1 minute are indicated by the mark "○", those with 40 - 60 per 1 minute are indicated by the mark "△", and those with more than 60 per 1 minute are indicated by the mark "X". If the rating is not worse than "△", the drop out number is small and the electromagnetic conversion characteristics are evaluated as good.

(8) Average Diameter of Fine particles

PPS is removed from the film by low temperature plasma ashing treatment (for example, using a type PR503 commercially available from Yamato Kagaku Co., Ltd) to expose the particles. The treatment conditions are selected such that the PPS is ashed while the fine particles are not damaged. The resultant particles are observed with a scanning electromicroscope, and the image of the fine particles is processed with an image analyzer (e.g., QTM900 commercially available from Cambridge Instrument). Not less than 5000 particles were observed changing the observation area and the observed image is processed according to the following mathematical treatment. The thus obtained number average particle size D is defined as the average particle size.

$D = \Sigma Di/N$

wherein Di represents corresponding circle diameter of the particle and N represents the number of particles.

(9) 10% Weight Loss Temperature by TGA

The 10% weight loss temperature was measured using a thermogravimetric analyzer (TGA) TG30M commercially avialble from Shimazu Seisakusho, Co., Ltd. under a nitrogen atmosphere at a heating rate of 10 °C/min. The sample weight was 5 mg.

(10) Single Particle Index

Cross sections of the film are observed by photographing them with a transmission type electromicroscope (TEM). If the magnification is set to 100,000 times, a single particle which cannot be divided any more can be observed. The single particle index is defined as (A - B)/A wherein A represents the total area occupied by the particles and B represents the area occupied by aggregates consisting of two or more particles. The conditions of TEM are as follows, and 500 fields of view with 2 square micrometers are observed:
Apparatus: JEM-1200EX commercially available from Nippon Electron Co., Ltd.
Magnification: 100,000 x
Acceleration Voltage: 100 kV
Thickness of Sections: About 100 nm

(11) Sphericity

Sphericity is defined as the ratio of longer diameter of particles (average value)/shorter diameter of particles (average value), measured as in (1), the longer diameter and the shorter diameter being caluculated by the following equations:

Longer Diameter = $\Sigma D1i/N$
Shorter Diameter = $\Sigma D2i/N$

wherein D1i and D2i represent the longer diameter (maximum diameter) and shorter diameter (minimum diameter) of each particle, respectively, and N represents the total number of particles.

(12) Surface Gloss Gs (60 °)

The surface gloss Gs (60 °) is measured in accordace with the 60 ° mirror surface gloss method defined in JIS Z-8741 (1962).

(13) Crude Protrusions

Using a double beam interference microscope, the protrusions of H3 or more (i.e., the protrusions giving three or more interference rings) are counted for 100 $cm^2$ of the film.

(14) Center Line Average Surface Roughness Ra

The center line average surface roughness was measured using a high precision thin film level difference-measuring apparatus ET-10 commercially available from Kosaka Kenkyusho, Co., Ltd. The conditions were as follows and the average of 20 times measurement s was employed as the average value.

Radius of Tip of Stylus: 0.5 µm
Load of Stylus: 5 mg
Length of Measured Portion: 1 mm
Cut Off Value: 0.08 mm

It should be noted that the definition of Ra is described in, for example, Jiro NARA, "Method of Measuring and Evaluating Surface Roughness" published by Sogo Gijutsu Center, 1983.

(15) Height of Protrusions

Using high precision thin film level difference-measuring apparatus ET-10 commercially available from Kosaka Kenkyusho, Co., Ltd., the stylus is moved at a velocity of 0.1 mm/sec and a roughness curve is obtained with a longitudinal magnification of N times. The height of the "i"th protrusion Pi is defined as Pi = (Mi - Vi)/N wherein Mi represents the level of the top of the "i"th peak and Vi represents the level of the valley at the left side of the "i"th peak. The moving direction of the touching pin is perpendicular to the longitudinal direction of the film. The conditions are as follows and average of 20 measurements was taken as the protrusion height:

Radius of Tip of Stylus: 0.5 µm
Load of Stylus: 5 mg
Length of Measured Portion: 1mm
Cut Off Value: 0.08 mm

(16) Protrusion Line Density

The number of the protrusions with at least a prescribed height was counted in a surface roughness curve obtained by measuring the surface roughness over a length of 30 mm using a high precision thin film level difference-measuring apparatus ET-10 commercially available from Kosaka Kenkyusho, Co., Ltd., and the counted number was divided with the measured length to obtain the number of protrusions per unit length, which is defined as the protrusion line density. For example, the protrusion line density of protrusions with a height of 0.05 µm or more is the number of protrusions per unit length calculated by dividing the number of protrusions with a height of at least 0.05 µm by the measured length.

Embodiments of the invention will now be described in more detail by way of examples.

[Examples]

Example 1

In a stainless steel autoclave, 32.6 kg (250 moles, containing 40% by weight of crystal water) of sodium sulfide, 100 g of sodium hydroxide, 36.1 kg (250 moles) of sodium benzoate and 79.2 kg of N-methyl-2-pyrrolidone (this may be hereinafter referred to as "NMP") were fed. After removing water at 205 °C, 37.5 kg (255 moles) of 1,4-dichlorobenzene (this may be hereinafter referred to as "p-DCP") and 20.0 kg of NMP were added thereto and the resulting mixture was reacted for 4 hours at 265 °C. The reaction product was washed with water and dried to obtain 2.2 kg (yield of 78%) poly-p-phenylene sulfide powder containing 100 mol% of p-phenylenesulfide with a melt viscosity of 3300 poise.

To 100 parts by weight of the thus prepared powder, 5 parts by weight of ethyleneglycol slurry (solid content of 20%) containing colloidal silica with a sphericity of 1.3 and an average particle size of 0.5 um was added and the resulting mixture was stirred at high speed with a Henschel mixer at 50 °C.

The resulting mixture was supplied to an extruder with one step of vents and with two axes rotating in the different directions, and was melted at 310 °C. The ethyleneglycol was removed from the melted resin through the vents. Thereafter, the melted polymer was extruded from a spinneret with a diameter of 3 mm and the extruded resin was rapidly cooled, followed by being cut into pellets to obtain a resin composition of the present invention containing polyphenylene sulfide as major component, which contains 1.0% by weight of colloidal silica with respect to the polymer (this resin is hereinafter referred to as "resin A-1").

The resin A-1 was melted at 310 °C in an extruder having a diameter of 40 mm. The melted resin was filtered through a filter made of metal fibers, which had a 95% cutting pore diameter of 10 µm, and then extruded from a T die having a linear lip with a length of 400 mm and a clearance of 1.5 mm thickness. The extruded sheet was then cast onto a metal drum kept at 25 °C to cool and solidify the sheet to obtain a non-oriented film. The film was then stretched in the longitudinal direction with a longitudinal stretching apparatus comprising a plurality of rolls at a stretching ratio of 3.7 times the original length and at a stretching rate of 30000%/min. at 100 °C. The resulting film was then stretched in the transverse direction using a tenter at a stretching ratio of 3.4 times the original length and at a stretching rate of 1000%/min at 100 °C. The resulting film was then heat set in a heat treatment chamber in the same tenter at 270 °C for 10 seconds under tension to obtain a biaxially oriented PPS film with a thickness of 2 µm (hereinafter referred to as film A-1).

Aluminum was then vapor-deposited in vacuum on the thus prepared biaxially oriented PPS film so as to attain a surface resistance of 2Ω. The aluminum was deposited in the form of a stripe such that margin regions along the longitudinal direction of the film are left (repetition of a deposited region with a width of 8.0 mm and a margin region of 1.0 mm width). The resulting film was slit such that the center of each deposited region and the center of each margin region were cut with a razor to obtain tapes with an overall width of 4.5 mm having a margin region of 0.5 mm width at the left or right side, and the resulting tapes were reeled. The thus prepared reel is hereinafter referred to as reel 1.

One tape with the margin region at the left side and one tape with the margin region at the right side were stacked and wound to obtain a wound body with a capacitance of about 0.1 µF. In this case, the tapes were stacked such that the longitudinal left edge of the tape with a margin region at the right side protruded by 0.5 mm from the longitudinal left edge of the tape with a margin region at the left side.

A core was removed from the wound body and the resultant core was pressed as it is at 180 °C under pressure of 10 $kg/cm^2$ for five minutes. To both edge faces of the pressed wound body, a metal spray was applied to form outer electrodes, and a lead wire was welded to each electrode to obtain a wound capacitor. The evaluation results of the film and the capacitor are shown in Table 1.

Example 2

The PPS powder prepared in Example 1 alone was supplied to the extruder used in Example 1 and melt extruded at 310 °C at a rate of 20 kg per hour. Simultaneously, the slurry of the colloidal silica in ethyleneglycol used in Example 1 was injected to the extruder from a port formed at a feeding portion of the extruder at a rate of 1 kg/hr. As in Example 1, the ethyleneglycol was removed from the melted resin at the venting portion of the extruder. Thereafter, the melted polymer was extruded from a spinneret with a diameter of 3 mm and the extruded resin was rapidly cooled, followed by being cut into pellets to obtain a resin composition of the present invention containing polyphenylene sulfide as major component, which contains 1.0% by weight of colloidal silica with respect to the polymer (this resin is hereinafter referred to as "resin B-1").

Using the thus prepared resin, the same procedure as in Example 1 was repeated to obtain a biaxially oriented PPS film (film B-1) with a thickness of 2 µm.

A wound capacitor was prepared from the thus obtained film in the same manner as in Example 1. The results of the evaluation of the film and the capacitor are shown in Table 1.

Example 3

A biaxially oriented PPS film having a thickness of 2 µm (film C-1) was prepared in the same manner as in Example 1 except that crosslinked polystyrene particles with a sphericity of 1.1 and an average particle size of 0.5 µm were employed in place of the collidal silica with an average particle size of 0.5 µm.

A wound capacitor was prepared from this film as in Example 1.

The results of the evaluation of the film and the capacitor are shown in Table 1.

Comparative Example 1

The silica sol employed in Example 1 was evaporated to dryness after exchanging the liquid medium with water to prepare silica fine particles with an average particle size of 0.5 µm (determined by a method similar to the measuring method (8)). One part by weight of the thus prepared particles were added to 100 parts by weight of the PPS powder employed in Example 1 and the resulting mixture was stirred at high speed with a Henschel mixer at 50 °C.

The thus obtained mixture was supplied to an extruder having no vents, which had two axes rotating in the same direction, and was agitated in melted state at 310 °C. The melted polymer was then extruded from a spinneret with a diameter of 3 mm and the extruded polymer was rapidly cooled, followed by being cut in the form of pelletes to obtain a resin composition containing polyphenylene sulfide as major component, which contains 1.0% by weight of colloidal silica with respect to the polymer (this resin is outside the scope of the present invention and hereinafter referred to as "resin D-1").

A wound capacitor was prepared as in Example 1 from this film.

The results of the evaluation of the film and the capacitor are shown in Table 1.

Comparative Example 2

A biaxially oriented film of 2 µm thickness was prepared in the same manner as in Example 1 except that colloidal silica with a sphericity of 1.1 and an average particle size of 0.008 µm was used in place of the colloidal silica with an average particle size of 0.5 µm (film E-1 and resin E-1).

The results of the evaluation of the film and the capacitor are shown in Table 1.

Comparative Example 3

A biaxially oriented film of 2 µm thickness was prepared in the same manner as in Example 1 except that colloidal silica with a sphericity of 1.3 and an average particle size of 3.5 µm was used in place of the colloidal silica with an average particle size of 0.5 µm (film F-1 and resin F-1).

The results of the evaluation of the film and the capacitor are shown in Table 1.

It can be seen from the Examples 1, 2 and 3 and Comparative Examples 1, 2 and 3, that PPS having dispersed fine particles and only a small amount of crude particles may be obtained according to the present invention, so that the film made from the resin composition has a reduced number of crude protrusions at the surface and a reduced number of insulation defects. As a result, the fraction of capacators made from the film which are defective in their ability to withstand a prescribed voltage is reduced to an extremely low level.

Examples 4 - 5, Comparative Examples 4 - 6

Ten parts of a slurry containing colloidal silica fine particles in an amount of 10% in terms of the solid content in a liquid medum shown in Table 1 was added to the PPS powder employed in Example 1 and the resulting mixture was then stirred at high speed at 50 °C.

The resulting mixture was supplied to an extruder with one step of vents and with two axes rotating in the different directions, and was melted at 310 °C. The polyethyleneglycol was removed from the melted resin through the vents. Thereafter the melted polymer was extruded from a spinneret with a diameter of 3 mm and the extruded resin was rapidly cooled, followed by being cut into pellets to obtain a resin composition of the present invention containing polyphenylene sulfide as a major component, which contained 1.0% by weight of colloidal silica with respect to the polymer.

A biaxially oriented PPS film of 2 µm thickness was prepared from these resins as in Example 1.

Wound capacitors were prepared from the films as in Example 1.

The results of the evaluation of the films and the capacitors are shown in Table 1.

Example 6

A biaxially oriented PPS film having a thickness of 15 um (film G-1) was prepared as in Example 1 from the resin composition containing polyphenylene sulfide as the major component obtained in Example 1 (resin A-1).

A magnetic coating solution with the composition described below was applied with a gravure roll on the thus prepared biaxially oriented PPS film, and the coated magnetic layer was magnetically oriented, followed by drying the magnetic layer. The thus obtained film was subjected to a calendering treatment at 70 °C under a line pressure of 200 kg/cm using a small test calendering apparatus (steel roll/Nylon roll, 5 steps), and the resultant film was cured at 70 °C for 48 hours. From the thus prepared pancake, a length of 250 m was cut and was set in a VTR cassette to provide a VTR cassette tape (magnetic recording medium).

The results of the evaluation of the film and the magnetic recording medium are shown in Table 2.

(Composition of Magnetic Coating Solution)

Co-containing Iron (BET value of 50 $m^2/g$): 100 parts

Elex A (vinyl chloride/vinyl acetate copolymer commercially available from Sekisui Chemicals, Inc.): 10 parts by weight

Coronate L (polyisocyanate commercially available from Nippon Urethane, Co., Ltd.): 5 parts by weight

Lecitin: 1 part by weight

Methylethyl Ketone: 75 parts by weight

Carbon Black: 2 parts by weight

Lauric Acid: 1.5 parts by weight

Example 7

A biaxially oriented PPS film having a thickness of 15 µm (film H-1) was prepared in the same manner as in Example 2 except that the resin composition of Example 2 (i.e., resin B-1) was used.

A VTR cassette tape (magnetic recording medium) was prepared from the film as in Example 6. The results of the evaluation of this film and the magnetic recording medium are shown in Table 2.

Comparative Example 6

A biaxially oriented PPS film having a thickness of 15 µm (film I-1) was prepared in the same manner as in Example 6 except that the resin composition of Comparative Example 1 (resin D-1) was used.

A VTR cassette tape (magnetic recording medium) was prepared from the film as in Example 6. The results of the evaluation of this film and the magnetic recording medium are shown in Table 2.

Comparative Example 7

A biaxially oriented PPS film having a thickness of 15 µm (film J-1) was prepared in the same manner as in Example 6 except that the resin composition of Comparative Example 2 (resin E-1) was used.

A VTR cassette tape (magnetic recording medium) was prepared from the film as in Example 6. The results of the evaluation of this film and the magnetic recording medium are shown in Table 2.

Comparative Example 8

A biaxially oriented PPS film having a thickness of 15 µm (film K-1) was prepared in the same manner as in Example 6 except that the resin composition of Comparative Example 3 (resin F-1) was used.

A VTR cassette tape (magnetic recording medium) was prepared from the film as in Example 6. The results of the evaluation of this film and the magnetic recording medium are shown in Table 2.

As can be seen from Examples 6 and 7, and Comparative Examples 6, 7 and 8 a biaxially oriented PPS film on which surface the number of crude protrusions is reduced can be prepared according to the process of the present invention, so that a magnetic recording medium having excellent drop out characteristics and excellent magnetic conversion characteristics may be prepared by employing the PPS film as its base film.

Table 1-1

| | Average Particle Size of Fine particles in Slurry (μm) | Liquid Medium of Slurry | Fine Particles | Sphericity of Fine Particles | Particle size of Fine Particles in Film (μm) | Single Particle Index | Gloss of Film Gs (60°) (%) | Protrusion line Density Pd (0.05) of Film (Protrusions/mm) |
|---|---|---|---|---|---|---|---|---|
| Example 1 | 0.50 | Ethyleneglycol | Colloidal Silica | 1.3 | 0.55 | 0.9 | 160 | 6.5 |
| Example 2 | 0.50 | Ethyleneglycol | Colloidal Silica | 1.3 | 0.60 | 0.9 | 150 | 6.0 |
| Example 3 | 0.50 | Ethyleneglycol | Crosslinked polystyrene | 1.1 | 0.52 | 0.9 | 155 | 7.0 |
| Example 4 | 0.45 | N-methylpyrrolidone | Colloidal Silica | 1.3 | 0.60 | 0.8 | 140 | 5.2 |
| Example 5 | 0.47 | Triethyleneglycol | Colloidal Silica | 1.3 | 0.64 | 0.9 | 155 | 6.0 |
| Comparative Example 1 | 0.50 | not used | Colloidal Silica | 1.1 | 1.60 | 0.2 | 205 | 4.2 |
| Comparative Example 2 | 0.008 | Ethyleneglycol | Colloidal Silica | 1.3 | 0.03 | 0.8 | 120 | 24.0 |
| Comparative Example 3 | 3.50 | Ethyleneglycol | Colloidal Silica | 1.3 | 3.70 | 0.9 | 110 | 5.3 |
| Comparative Example 4 | 0.45 | Water | Colloidal Silica | 1.3 | 0.97 | 0.3 | 105 | 5.1 |
| Comparative Example 5 | 0.48 | p-xylene | Colloidal Silica | 1.3 | 0.79 | 0.4 | 120 | 5.8 |

Table 1 - 2

| | Large Particles (a) (particles/10cm$^2$) | Large Particles (b) (kg) | Insulation Defects in Film (defects/m$^2$) | Initial Capacitance stability of Capacitor (%) | Failure of Capacitor to Withstand Voltage (%) |
|---|---|---|---|---|---|
| Example 1 | 0 | 3.2 | 15 | 4.2 | 1.1 |
| Example 2 | 0 | 2.9 | 17 | 4.5 | 1.3 |
| Example 3 | 0 | 3.1 | 13 | 3.9 | 0.9 |
| Example 4 | 1 | 2.7 | 20 | 4.8 | 1.6 |
| Example 5 | 0 | 2.5 | 22 | 4.9 | 1.8 |
| Comparative Example 1 | 40 | 0.8 | 134 | 14.0 | 18.7 |
| Comparative Example 2 | 26 | 1.5 | 77 | 12.0 | 11.9 |
| Comparative Example 3 | 8 | 2.8 | 98 | 6.9 | 19.6 |
| Comparative Example 4 | 35 | 0.9 | 129 | 13.1 | 17.5 |
| Comparative Example 5 | 29 | 1.2 | 102 | 10.9 | 18.1 |

Table 2-1

| | Average Particle Size of Fine Particles in Slurry (μm) | Liquid Medium of Slurry | Fine Particles | Sphericity of Fine Particles | Particle size of Fine Particles in Film (μm) | Single Particle Index |
|---|---|---|---|---|---|---|
| Example 6 | 0.50 | Ethyleneglycol | Colloidal Silica | 1.3 | 0.55 | 0.9 |
| Example 7 | 0.50 | Ethyleneglycol | Colloidal Silica | 1.3 | 0.60 | 0.9 |
| Comparative Example 6 | 0.50 | Ethyleneglycol | Colloidal Silica | 1.3 | 1.60 | 0.2 |
| Comparative Example 7 | 0.008 | Ethyleneglycol | Colloidal Silica | 1.1 | 0.03 | 0.8 |
| Comparative Example 8 | 3.50 | Ethyleneglycol | Colloidal Silica | 1.3 | 3.70 | 0.9 |

Table 2-2

| | Number of Large Protrusions on Film Surface (protrusions/100cm²) | Ra of Film ( μm) | Large Particles (a) (particles/10cm²) | Large Particles (b) (kg) | Magnetic Conversion Characteristics of Magnetic Recording Media |
|---|---|---|---|---|---|
| Example 6 | 15 | 0.028 | 0 | 3.2 | O |
| Example 7 | 18 | 0.035 | 0 | 2.9 | O |
| Comparative Example 6 | 520 | 0.061 | 40 | 0.8 | × |
| Comparative Example 7 | 220 | 0.025 | 26 | 1.5 | × |
| Comparative Example 8 | 405 | 0.065 | 8 | 2.8 | × |

## Claims

1. A polyphenylene sulfide film which consists essentially of a resin composition containing polyphenylene sulfide in an amount of 70% by weight or more, in which fine particles with an average particle size of 0.05 - 3 μm are dispersed, the fine particles having a single particle index of not less than 0.5, which single particle index (SPI) is defined by the equation

SPI = (A-B)/A

where A is the total area occupied by the particles and
B is the area occupied by aggregates of two or more particles.

**2.** A polyphenylene sulfide film according to claim 1, which is a biaxially oriented film.

**3.** A film according to claim 1 or 2, wherein the number of large protrusions X (protrusions/100 $cm^2$) from a surface of the film satisfies the following equation (1)

$X \leqq 6000Ra$ (1)

wherein Ra represents the center line average surface roughness of the film surface.

**4.** A film according to any preceding claim, wherein the gloss Gs(60 °C) of the film is 115% to 200% and a number of protrusions higher than 0.05 µm exists on the film surface, which number is at least 5.0 protrusions/mm in terms of protrusion line density.

**5.** A film according to any preceding claim, wherein the fine particles are selected from spherical silica, spherical crosslinked polystyrene and spherical silicone particles.

**6.** A capacitor comprising a polyphenylene sulfide film according to claim 2 or 4 as a major dielectric material and an inner electrode made of a self-supporting metal foil or a non-self-supporting thin metal layer.

**7.** A capacitor according to claim 6, having an inner electrode made of a non-self-supporting thin metal layer, which capacitor has a stacked structure.

**8.** A magnetic recording medium comprising a polyphenylene sulfide film according to claim 2 or 3 and a magnetic layer formed on at least one surface of the polyphenylene sulfide film.

**9.** A process for producing a polyphenylene sulfide film comprising the steps of:
mixing a slurry comprising a liquid medium having a boiling point of 180 - 290 °C and, dispersed therein, fine particles having an average particle size in the liquid medium of not larger than 3 µm with polyphenylene sulfide powder such that the particles are present in an amount in a range of 1 - 100% by weight with respect to the polyphenylene sulfide;
supplying the resulting mixture to an extruder having at least one step of vents to melt said mixture;
eliminating the liquid medium of the slurry from the vent; and
extruding the resulting polyphenylene sulfide in which the fine particles are dispersed to obtain a film in which the fine particles are dispersed.

**10.** A process for producing a biaxially oriented polyphenylene sulfide film comprising the steps of:
mixing a slurry comprising a liquid medium having a boiling point of 180 - 290 °C and, dispersed therein, fine particles having an average particle size in the liquid medium of not larger than 3 µm with polyphenylene sulfide powder such that the particles are present in an amount in a range of 1 - 100% by weight with respect to the polyphenylene sulfide;
supplying the resulting mixture to an extruder having at least one step of vents to melt said mixture;
eliminating the liquid medium of the slurry from the vent; and
extruding the resulting polyphenylene sulfide in which the fine particles are dispersed to obtain an amorphous film in which the fine particles are dispersed;
biaxially stretching the amorphous film at an area stretching ratio of not less than 4 times at 80 - 120 °C; and
heating setting the stretched film under tension at a temperature of from 180 °C to the melting point of the polyphenylene sulfide polymer.

**11.** A process for producing a polyphenylene sulfide film comprising the steps of:

supplying polyphenylene sulfide in a cylinder of an extruder having at least one level of vent;

forcibly injecting into the cylinder of the extruder a slurry of fine particles dispersed in a liquid medium having a boiling point of 180 - 290 °C, which fine particles are dispersed in the liquid medium such that the average particle size thereof is not larger than 3 µm, in an amount of from 1% by weight to 100% by weight in terms of the fine particles with respect to the polyphenylene sulfide polymer before and/or after the polymer is melted;

eliminating the liquid medium alone from the vent; and

extruding the mixture of the polymer and the fine particles to produce a film in which microparticles are dispersed.

**12.** A process for producing a biaxially oriented polyphenylene sulfide film comprising the steps of:

supplying polyphenylene sulfide in a cylinder of an extruder having at least one level of vent;

forcibly injecting into the cylinder of the extruder a slurry of fine particles dispersed in a liquid medium having a boiling point of 180 - 290 °C, which fine particles are dispersed in the liquid medium such that the average particle size thereof is not larger than 3 µm, in an amount of from 1% by weight to 100% by weight in terms of the fine particles with respect to the polyphenylene sulfide polymer before and/or after the polymer is melted;

eliminating the liquid medium alone from the vent;

extruding the mixture of the polymer and the fine particles to produce an amorphous film in which microparticles are dispersed;

biaxially stretching the amorphous film with an area stretching ratio of not less than 4 times at 80 - 120 °C; and

heat setting the stretched film under tension at a temperature of from 180 °C to the melting point of the polyphenylene sulfide polymer.

**Patentansprüche**

**1.** Polyphenylensulfid-Film, der im wesentlichen aus einer Harzzusammensetzung besteht, die Polyphenylensulfid in einer Menge von 70 Gew.-% oder mehr enthält, worin Feinteilchen mit einer mittleren Teilchengröße von 0,05 - 3 µm dispergiert sind, wobei die Feinteilchen einen Einzelteilchenindex ("singe particle index", SPI) von nicht weniger als 0,5 aufweisen, wobei der Einzelteilchenindex (SPI) durch die Gleichung

$$SPI = (A-B)/A$$

definiert ist, worin A die gesamte von den Teilchen eingenommene Fläche und B die von Aggregaten aus Zwei oder mehr Teilchen eingenommene Fläche ist.

**2.** Polyphenylensulfid-Film nach Anspruch 1, der ein biaxial orientierter Film ist.

**3.** Film nach Anspruch 1 oder 2, worin die Anzahl an großen Vorsprüngen X (Vorsprüng/100 $cm^2$) an einer Oberfläche des Films der folgenden Gleichung (1) genügt:

$$X \leqq 6.000\ Ra \qquad (1)$$

worin Ra die mittlere Mittellinien-Oberilächenrauhheit der Filmoberfläche ist.

**4.** Film nach irgendeinem der vorangegangenen Ansprüche, worin der Glanz Gs(60 °C) des Films 115 - 200% beträgt und eine Anzahl an höheren Vorsprüngen als 0,05 µm an der Filmoberfläche existiert, die zumindest 5,0 Vorsprünge/mm, ausgedrückt als Vorsprungsliniendichte, beträgt.

**5.** Film nach irgendeinem der vorangegangenen Ansprüche, worin die Feinteilchen aus sphärischen Silika-, sphärischen vernetzten Polystyrol- und sphärischen Silikon-Teilchen bestehen.

**6.** Kondensator, umfassend einen Polyphenylensulfid-Film nach Anspruch 2 oder 4 als dielektrisches Hauptmaterial und eine Innenelektrode aus einer selbsttragenden Metallfolie oder einer nicht-selbsttragenden dünnen Metallschicht.

**7.** Kondensator nach Anspruch 6 mit einer Innenelektrode aus einer nichtselbsttragenden dünnen Metallschicht, der eine Stapelstruktur aufweist.

**8.** Magnetaufzeichnungsmedium, umfassend einen Polyphenylensulfid-Film nach Anspruch 2 oder 3 und eine magnetische Schicht, die auf zumindest einer Oberfläche des Polyphenylensulfid-Films ausgebildet ist.

**9.** Verfahren zur Herstellung eines Polyphenylensulfid-Films, umfassend die Schritte:
Vermischen einer Aufschlämmung, die ein flüssiges Medium mit einem Siedepunkt von 180 - 290 °C und darin dispergierte Feinteilchen mit einer mittleren Teilchengröße im flüssigen Medium von nicht über 3 $\mu$m umfaßt, mit Polyphenylensulfid-Pulver, sodaß die Teilchen in einer Menge im Bereich von 1 - 100 Gew.-% bezogen auf Polyphenylensulfid vorhanden sind;
Einbringen des erhaltenen Gemischs in einen Extruder mit zumindest einer Stufe mit Öffnungen, um das Gemisch zu schmelzen;
Abführen des flüssigen Mediums der Aufschlämmung durch die Öffnung; und
Extrudieren des erhaltenen Polyphenylensulfids, worin die Feinteilchen dispergiert sind, um einen Film zu erhalten, worin die Feinteilchen dispergiert sind.

**10.** Verfahren zur Herstellung eines biaxial orientierten Polyphenylensulfid-Films, umfassend die Schritte:
Vermischen einer Aufschlämmung, die ein flüssiges Medium mit einem Siedepunkt von 180 - 290 °C und darin dispergierte Feinteilchen mit einer mittleren Teilchengröße im flüssigen Medium von nicht über 3 $\mu$m umfaßt, mit Polyphenylensulfid-Pulver, sodaß die Teilchen in einer Menge im Bereich von 1 - 100 Gew.-% bezogen auf Polyphenylensulfid vorhanden sind;
Einbringen des erhaltenen Gemischs in einen Extruder mit zumindest einer Stufe mit Öffnungen, um das Gemisch zu schmelzen;
Ablassen des flüssigen Mediums der Aufschlämmung durch die Öffnung;
Extrudieren des erhaltenen Polyphenylensulfids, worin die Feinteilchen dispergiert sind, um einen amorphen Film zu erhalten, worin die Feinteilchen dispergiert sind;
biaxiales Recken des amorphen Films mit einem Flächendehnungsverhältnis von nicht mehr als das 4fache bei 80 - 120 °C; und
Heißfixieren des gereckten Films unter Spannung bei einer Temperatur zwischen 180 °C und dem Schmelzpunkt des Polyphenylensulfid-Polymers.

**11.** Verfahren zur Herstellung eines Polyphenylensulfid-Films, umfassend die Schritte:
Einbringen von Polyphenylensulfid in einen Zylinder eines Extruders mit zumindest einer Stufe mit Öffnungen;
Zwangsinjizieren einer Aufschlämmung von in einem flüssigen Medium mit einem Siedepunkt von 180 - 290 °C dispergierten Feinteilchen in den Zylinder des Extruders, die so in dem flüssigen Medium dispergiert sind, daß ihre mittlere Teilchengröße nicht über 3 $\mu$m liegt, in einer Menge von 1 - 100 Gew.-% Feinteilchen bezogen auf Polyphenylensulfid-Polymer vor und/oder nach dem Schmelzen des Polymers;
Abführen nur des flüssigen Mediums durch die Öffnung; und
Extrudieren des Gemischs aus Polymer und Feinteilchen, um einen Film herzustellen, worin Mikroteilchen dispergiert sind.

**12.** Verfahren zur Herstellung eines biaxial orientierten Polyphenylensulfid-Films, umfassend die Schritte:
Einbringen von Polyphenylensulfid in einen Zylinder eines Extruders mit zumindest einer Stufe mit Öffnungen;
Zwangsinjizieren einer Aufschlämmung von in einem flüssigen Medium mit einem Siedepunkt von 180 - 290 °C dispergierten Feinteilchen in den Zylinder des Extruders, die so in dem flüssigen Medium dispergiert sind, daß ihre mittlere Teilchengröße nicht über 3 $\mu$m liegt, in einer Menge von 1 - 100 Gew.-% Feinteilchen bezogen auf Polyphenylensulfid-Polymer vor und/oder nach dem Schmelzen des Polymers;
Abführen nur des flüssigen Mediums durch die Öffnung;
Extrudieren des Gemischs aus Polymer und Feinteilchen, um einen amorphen Film herzustellen, worin Mikroteilchen dispergiert sind;
biaxiales Recken des amorphen Films mit einem Flächendehnungsverhältnis von nicht mehr als das 4fache bei 80 - 120 °C; und

Heißfixieren des gereckten Films unter Spannung bei einer Temperatur zwischen 180 °C und dem Schmelzpunkt des Polyphenylensulfid-Polymers.

**Revendications**

1. Film en polyphénylène sulfure qui consiste essentiellement d'une composition de résine contenant du polyphénylène sulfure en une quantité de 70% en poids ou plus, dans laquelle de fines particules avec une taille de particules moyenne de 0,05 à 3 µm sont dispersées, les particules fines ayant un indice de particules unique non inférieur à 0,5, lequel indice de particules (SPI) est défini par l'équation

   $$SPI = (A-B)/A$$

   où A est la surface totale occupée par les particules et
   B est la surface occupée par les agrégats de deux ou plus particules.

2. Film en polyphénylène sulfure selon la revendication 1, qui est un film orienté biaxialement.

3. Film selon la revendication 1 ou 2, dans lequel le nombre de grandes protrusions X (protrusions/100 $cm^2$) d'une surface du film satisfait l'équation (1) suivante

   $$X \leqq 6000Ra \quad (1)$$

   où Ra représente la rugosité de surface moyenne à la ligne centrale de la surface du film.

4. Film selon l'une quelconque des revendications précédentes, dans lequel la brillance Gs (60 °C) du film est de 115% à 200% et un nombre des protrusions supérieures à 0,05 µm existe sur la surface du film, lequel nombre est au moins de 5,0 protrusions/mm en termes de densité de ligne de protrusions.

5. Film selon l'une quelconque des revendications précédentes, dans lequel les particules fines sont choisies parmi des particules de silice sphériques, de polystyrène réticulé sphériques et de silicone sphériques.

6. Condensateur comprenant un film polyphénylène sulfure selon la revendication 2 ou 4, en tant que matériau diélectrique majoritaire et une électrode interne faite d'une feuille métallique auto-supportante ou d'une couche métallique fine non-auto-supportante.

7. Condensateur selon la revendication 6, ayant une électrode interne faite d'une couche métallique fine non-auto-supportante, lequel condensateur a une structure empilée.

8. Milieu d'enregistrement magnétique comprenant un film polyphénylène sulfure selon la revendication 2 ou 3, et une couche magéntique formée sur au moins une sur face du film polyphénylène sulfure.

9. Procédé pour produire un film polyphénylène sulfure comprenant les étapes de :
   mélange d'une boue comprenant un milieu liquide ayant un point d'ébullition de 180 - 290 °C et, dispersées à l'intérieur, de fines particules ayant une taille de particules moyenne dans le milieu liquide non supérieure à 3 µm avec une poudre de polyphénylène sulfure de sorte que les particules sont présentes en une quantité dans un intervalle de 1 à 100% en poids par rapport au polyphénylène sulfure;
   alimentation du mélange résultant à une extrudeuse ayant au moins un étage d'évents pour fondre ledit mélange;
   élimination du milieu liquide de la boue de l'évent; et
   extrusion du polyphénylène sulfure résultant dans lequel les particules fines sont dispersées pour obtenir un film dans lequel les particules fines sont dispersées.

10. Procédé pour produire un film polyphénylène sulfure orienté axialement comprenant les étapes de :
   mélange d'une boue comprenant un milieu liquide ayant un point d'ébullition de 180 à 290 °C et, dispersées à l'intérieur, de fines particules ayant une taille de particules moyenne dans le milieu liquide non supérieure à 3 µm avec une poudre de polyphénylène sulfure de sorte que les particules sont

présentes en une quantité dans un intervalle de 1 à 100% en poids par rapport au polyphénylène sulfure;

alimentation du mélange résultant à une extrudeuse ayant au moins un étage d'évents pour fondre ledit mélange;

alimentation du milieu liquide de la boue de l'évent; et

extrusion du polyphénylène sulfure résultant dans lequel les fines particules sont dispersées pour obtenir un film amorphe dans lequel les fines particules sont dispersées;

étirage biaxialement du film amorphe à un rapport d'étirage de surface non inférieur à 4 fois de 80 à 120 °C; et

stabilisation par chauffage du film étiré sous tension à une température de 180 °C au point de fusion du polymère polyphénylène sulfure.

**11.** Procédé pour produire un film de polyphénylène sulfure comprenant les étapes de :

alimentation de polyphénylène sulfure dans un cylindre d'une extrudeuses ayant au moins un niveau d évent;

injection en force dans le cylindre de l'extrudeuse d'une boue de particules fines dispersées dans un milieu liquide ayant un point d'ébullition de 180 à 290 °C, lesquelles particules fines sont dispersées dans le milieu liquide de sorte que la taille moyenne des particules de celui-ci ne soit pas supérieure à 3 µm, en une quantité de 1% en poids à 100% en poids en termes de particules fines par rapport au polymère polyphénylène sulfure avant et/ou après que le polymère soit fondu;

élimination du milieu liquide seul de l'évent; et

extrusion du mélange du polymère et des particules fines pour produire un film dans lequel les microparticules sont dispersées.

**12.** Procédé pour produire un film polyphénylène sulfure orienté biaxialement comprenant les étapes de :

alimentation du polyphénylène sulfure dans un cylindre d'une extrudeuse ayant au moins un niveau d'évent;

injection en force dans le cylindre de l'extrudeuse d'une boue de particules fines dispersées dans un milieu liquide ayant un point d'ébullition de 180 à 290 °C, lesquelles particules fines sont dispersées dans le milieu liquide de sorte que la taille moyenne des particules ne soit pas supérieure à 3 µm, en un quantité de 1% en poids à 100% en poids en termes de particules fines par rapport au polymère polyphénylène sulfure avant et/ou après que le polymère soit fondu;

élimination du milieu liquide seul de l'évent;

extrusion du mélange du polymère et des particules fines pour produire un film amorphe dans lequel les microparticules sont dispersées;

étirage biaxialement du film amorphe avec un rapport d'étirage de surface non inférieur à 4 fois de 80 à 120 °C; et

stabilisation par chauffage du film étiré sous tension à une température de 180 °C au point de fusion du polymère polyphénylène sulfure.